# FASCICULE DE BREVET EUROPEEN

(11) **EP 3 103 155 B1**
(45) Date de publication et mention de la délivrance du brevet: **22.11.2017**
(21) Numéro de dépôt: 15706889.1
(22) Date de dépôt: 04.02.2015
(51) Int. Cl.: H01M 10/0525, H01M 4/505, H01M 4/485, H01M 10/0569, H01M 10/0567

(54) **BATTERIES AU LITHIUM SPÉCIFIQUES COMPRENANT DES ÉLECTROLYTES NON AQUEUX À BASE DE COMPOSÉS SULFONES**
SPEZIFISCHE LITHIUMBATTERIEN MIT WASSERFREIEN ELEKTROLYTEN AUF DER BASIS VON SULFONVERBINDUNGEN
SPECIFIC LITHIUM BATTERIES COMPRISING NON-AQUEOUS ELECTROLYTES BASED ON SULFONE COMPOUNDS

(30) Priorité: 06.02.2014 FR 1450928
(43) Date de publication de la demande: 14.12.2016
(73) Titulaire: Renault S.A.S., 92100 Boulogne-Billancourt (FR)
(72) Inventeur: GALIANO, Hervé, F-37700 La Ville Aux Dames (FR); LE DIGABEL, Matthieu, F-37260 Monts (FR); BILLER, Agnès, F-37550 Saint Avertin (FR); PENOT, Nelly, F-37260 Monts (FR); MARTIN, Jean Frédéric, F-38140 Renage (FR); DUDEZERT, Christophe, F-75014 Paris (FR)
(74) Mandataire: Brevalex
(86) Numéro de dépôt international: PCT/FR2015/050268
(87) Numéro de publication internationale: WO 2015/118264

(56) Documents cités:
- JP-A- 2011 054 490
- US-A1- 2006 147 808
- US-B2- 6 939 644
- JULIEN DEMEAUX ET AL: "On the limited performances of sulfone electrolytes towards the LiNi0.4Mn1.6O4 spinel", PHYSICAL CHEMISTRY CHEMICAL PHYSICS, vol. 15, no. 48, 11 octobre 2013 (2013-10-11), pages 20900-20910, XP055135343, ISSN: 1463-9076, DOI: 10.1039/c3cp53941e
- DATABASE WPI Section EI, Week 201403 Thomson Scientific, London, GB; Class X16, AN 2014-A51917 XP002728623, -& CN 103 378 360 A (ZHANGJIAGANG GUOTAI HUARONG NEW CHEMICAL MATERIALS CO LTD) 30 octobre 2013 (2013-10-30)

## Description

### DOMAINE TECHNIQUE

La présente invention a trait à des batteries au lithium spécifiques comprenant des électrolytes non aqueux à base d'au moins un solvant sulfone et un ou plusieurs additifs spécifiques, ces batteries étant plus spécifiquement des batteries lithium-ion.

Les batteries au lithium sont particulièrement intéressantes pour les domaines où l'autonomie est un critère primordial, tels que cela est le cas des domaines de l'informatique, de la vidéo, de la téléphonie mobile, des transports tels que les véhicules électriques, les véhicules hybrides, ou encore des domaines médicaux, spatiaux, de la microélectronique.

D'un point de vue fonctionnel, les batteries lithium-ion reposent sur le principe de l'intercalation-désintercalation du lithium au sein des matériaux constitutifs des électrodes des cellules électrochimiques de la batterie.

Plus précisément, la réaction à l'origine de la production de courant (c'est-à-dire lorsque la batterie est en mode de décharge) met en jeu le transfert, par l'intermédiaire d'un électrolyte conducteur d'ions lithium, de cations lithium provenant d'une électrode négative qui viennent s'intercaler dans le réseau accepteur de l'électrode positive, tandis que des électrons issus de la réaction à l'électrode négative vont alimenter le circuit extérieur, auquel sont reliées les électrode positive et négative.

Ces électrolytes peuvent consister en un mélange comprenant au moins un solvant organique et au moins un sel de lithium pour assurer la conduction desdits ions lithium, ce qui nécessite que le sel de lithium soit dissous dans ledit solvant organique.

Les sels de lithium couramment utilisés peuvent être du LiPF₆, du LiClO₄, LiAsF₆, LiBF₄, LiRSO₃, LiN(RSO₂)₂, LiC(RSO₂)₂ (R étant un atome de fluor ou un groupe perfluoroalkyle comprenant de 1 à 8 atomes de carbone), du trifluorométhanesulfonylimide de lithium (LiTFSI), du bis(oxalato)borate de lithium (LiBOB), du bis(perfluoroéthylsulfonylimide) de lithium (LiBETI), du fluoroalkylphosphate de lithium (LiFAP), ces sels de lithium étant classiquement dissous dans un mélange de solvants organiques à base de carbonates cycliques et/ou linéaires. De tels électrolytes présentent une conductivité élevée (par exemple, supérieure à 1 mS/cm) et de bonnes performances électrochimiques dans une fenêtre de potentiels s'échelonnant de 0 à 4,2V (exprimé par rapport à Li⁺/Li). Au-delà de 4,2V, comme explicité dans J.Electrochem.Soc., 138, (1991) 2864, ces solutions électrolytiques se dégradent par oxydation au-delà de ce potentiel, ce qui entraîne une génération de gaz et une détérioration des performances de la batterie se traduisant par une autodécharge partielle ou totale et une diminution de la durée de vie.

Pour valoriser de nouveaux matériaux d'électrode, qui permettent d'augmenter la capacité des batteries, des recherches ont porté sur la conception de nouveaux électrolytes à base de solvant (s) ne se dégradant pas lorsqu'ils sont soumis à des différences de potentiels élevées (par exemple, de l'ordre de 5V).

Comme substituts des solvants carbonates mentionnés ci-dessus, les solvants sulfones peuvent constituer de bons candidats.

Les sulfones peuvent être divisées en deux groupes : les sulfones cycliques et les sulfones linéaires, ces sulfones pouvant être qualifiées de symétriques, lorsque les groupes situés de part et d'autre du groupe -SO₂- sont identiques ou de dissymétriques, lorsque les groupes situés de part et d'autre du groupe -SO₂- sont différents.

En tant que sulfone cyclique, la tétraméthylsulfone (connue, également, sous l'abréviation TMS) a déjà été étudiée pour être utilisée dans des solutions électrolytiques pour batteries au lithium, et plus spécifiquement, pour batteries lithium-ion. En particulier Watanabe et al. (Journal of Power Sources 179 (2008),770-779) ont testé un mélange comprenant du TMS et de l'acétate d'éthyle (pour obtenir un mélange de viscosité moindre que le TMS seul) auquel est ajouté un additif (le carbonate de vinylène) avec différents couples d'électrodes : respectivement Li/LiCoO₂ et Li/LiNi_{0,5}Mn_{1,5}O₄. Malgré une bonne stabilité chimique en oxydation, les résultats en cyclages restent à améliorer, car les performances électrochimiques des batteries testées diminuent au fur et à mesure que le nombre de cycles augmente. De même, l'efficacité coulombique (à savoir, le rapport de la capacité de décharge sur celle de la charge) reste également à améliorer.

Les sulfones linéaires ont également fait l'objet d'études pour une application en tant qu'électrolytes dans des batteries au lithium.

Plus particulièrement, la sulfone dissymétrique, l'éthylméthylsulfone a démontré son efficacité en termes de stabilité électrochimique au-dessus de 5V, notamment lorsqu'elle est utilisée avec, comme sel de lithium, du LiPF₆ (comme illustré par Seel et al., J.Electrochem.Soc. 147(2000), 892). Toutefois, l'éthylméthylsulfone, utilisée seul, présente l'inconvénient d'être solide à température ambiante, ce qui restreint son utilisation en tant que solvant unique. L'article de JULIEN DEMEAUX ET AL intitulé "On the limited performances of sulfone electrolytes towards the LiNi0.4Mn1.6O4 spinel", PHYSICAL CHEMISTRY CHEMICAL PHYSICS, vol. 15, no. 48, 11 octobre 2013 (2013-10-11), pages 20900-20910 décrit des batteries au lithium de configuration LiNi_{0,4}Mn_{1,6}O₄/Li₄Ti₅O₁₂ ayant des électrolytes à base de solvants sulfones, ces électrolytes comprenant des mélanges binaires ou acyclique avec un carbonate d'alkyle. Cet article divulgue donc une batterie au lithium selon le préambule de la revendication 1.

La demande de brevet JP 2011 054490 A de MITSUBISHI CHEM CORP décrit des batteries au lithium ayant un électrolyte comprenant un composé carbonate cyclique spécifique, un composé anhydride cyclique, un composé organique comprenant un groupe -S=O, et un sel de lithium.

La demande de brevet CN 103 378 360 A décrit un électrolyte pour une batterie au lithium comprenant un sel de lithium, un mélange TMS-DMC et de l'anhydride phtalique. Cette demande divulgue donc un électrolyte conducteur d'ions lithium selon le préambule de la revendication 14.

En résumé, malgré l'apport des sulfones sur la durabilité d'une batterie fonctionnant, en particulier, à haut potentiel (par exemple, un potentiel de l'ordre de 5V), il subsiste un besoin pour des batteries au lithium spécifiques comprenant un électrolyte à base de solvant(s) sulfone(s) qui soit à même de résoudre notamment les problèmes suivants :
- les problèmes d'autodécharge en stockage, notamment pour des batteries basées sur des couples d'électrode délivrant une tension élevée (par exemple, une tension supérieure à 4,2V) ;
- la durée de vie des batteries (par exemple, en termes de cyclabilité et d'efficacité coulombique).

### EXPOSÉ DE L'INVENTION

Les auteurs de la présente invention ont découvert qu'en ajoutant un additif spécifique à un électrolyte comprenant au moins un solvant de la famille des sulfones, il est possible de répondre aux besoins exprimés ci-dessus.

Ainsi, l'invention a trait à une batterie au lithium comprenant au moins une cellule électrochimique comprenant un électrolyte conducteur d'ions lithium comprenant au moins un solvant sulfone, au moins un additif choisi parmi les composés anhydrides et au moins un sel de lithium, lequel électrolyte est disposé entre une électrode positive comprenant, comme matériau actif, un oxyde lithié de formule LiNi_{0,4}Mn_{1,6}O₄ ou LiNi_{0,5}Mn_{1,5}O₄ et une électrode négative comprenant, comme matériau actif, du Li₄Ti₅O₁₂.

On précise que, par électrode positive, on entend, classiquement, dans ce qui précède et ce qui suit, l'électrode qui fait office de cathode, quand la batterie débite du courant (c'est-à-dire lorsqu'elle est en processus de décharge) et qui fait office d'anode lorsque la batterie est en processus de charge.

On précise que, par électrode négative, on entend, classiquement, dans ce qui précède et ce qui suit, l'électrode qui fait office d'anode, quand la batterie débite du courant (c'est-à-dire lorsqu'il est en processus de décharge) et qui fait office de cathode, lorsque la batterie est en processus de charge.

Avec un telle association entre l'électrolyte susmentionné et le couple d'électrodes susmentionné, les auteurs de la présente invention ont pu mettre en évidence une amélioration significative des performances des batteries au lithium notamment en termes de cyclabilité, d'autodécharge (ce phénomène étant significativement réduit avec les électrolytes de l'invention) par rapport à des électrolytes comprenant les mêmes ingrédients hormis la présence dudit additif. Qui plus est, l'amélioration de ses propriétés n'affecte pas la durabilité des batteries contenant ces électrolytes.

Ils ont pu mettre également en évidence un phénomène de synergie grâce à l'association susmentionnée, car les propriétés des électrolytes en termes de cyclabilité et d'autodécharge s'en trouvent renforcées par rapport à un électrolyte comprenant le même additif mais uniquement avec des solvants carbonates.

Qui plus est, les électrolytes compris dans les batteries de l'invention présentent une stabilité vis-à-vis des phénomènes d'oxydation, notamment lorsqu'ils sont soumis à des potentiels supérieurs à 5 V exprimés par rapport au couple Li⁺/Li.

Enfin, les électrolytes compris dans les batteries de l'invention permettent de conférer aux batteries au lithium, dans lesquels ils sont incorporés, d'excellents résultats en termes d'efficacité coulombique.

Comme mentionné ci-dessus, l'électrolyte comprend au moins un solvant sulfone, c'est-à-dire un solvant comprenant au moins une fonction -SO₂-.

Il peut s'agir d'un solvant sulfone, qui peut être un solvant sulfone cyclique ou encore un solvant sulfone linéaire.

A titre d'exemples de solvants sulfones cycliques, on peut citer les solvants sulfones répondant à la formule (I) suivante : 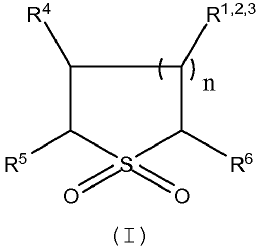 dans laquelle :
- R¹, R⁴, R⁵, R⁶ et, le cas échéant, R² et R³ représentent, indépendamment l'un de l'autre, un atome d'hydrogène, un atome d'halogène (par exemple, fluor, chrome ou brome) ou un groupe alkyle ;
- n est en entier allant de 1 à 3, ce qui signifie, en d'autres termes, que :
   - lorsque n est égal à 1, le solvant sulfone répond à la formule (II) suivante : 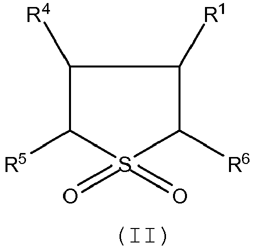 R¹, R⁴, R⁵ et R⁶ étant tels que définis ci-dessus ;
   - lorsque n est égal à 2, le solvant sulfone répond à la formule (III) suivante : 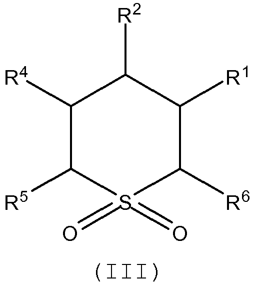 R¹ à R⁵ étant tels que définis ci-dessus ;
   - lorsque n est égal à 3, le solvant sulfone répond à la formule (IV) suivante :

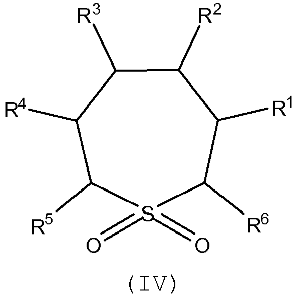

Comme exemples spécifiques de solvants sulfones cycliques, on peut citer la tétraméthylsulfone (connue également sous le nom de sulfolane) ou la 3-méthylsulfolane.

L'électrolyte peut comprendre un mélange de sulfones cycliques, par exemple, un mélange de deux sulfones cycliques.

Lorsqu'il s'agit d'un solvant sulfone linéaire, il peut s'agir d'un solvant sulfone linéaire symétrique ou asymétrique.

Par « symétrique », on entend un solvant sulfone linéaire, qui comprend, de part et d'autre du groupe -SO₂-, des groupes identiques.

Par « asymétrique », on entend un solvant sulfone linéaire, qui comprend, de part et d'autre du groupe -SO₂-, des groupes différents.

A titre d'exemples de solvant sulfone linéaire, on peut citer les solvants sulfones répondant à la formule (V) suivante :

R⁷-SO₂-R⁸ (V)

dans laquelle R⁷ et R⁸ représentent, indépendamment l'un de l'autre, un groupe alkyle comprenant de 1 à 7 atomes de carbone comprenant éventuellement un ou plusieurs atomes d'halogène (par exemple, fluor, chlore ou brome), un groupe aryle comprenant éventuellement un ou plusieurs atomes d'halogène (par exemple, fluor, chlore ou brome).

Par exemple, R⁷ et R⁸ peuvent représenter, indépendamment l'un de l'autre, un groupe méthyle (-CH₃), un groupe éthyle (-CH₂-CH₃), un groupe n-propyle (-CH₂-CH₂-CH₃), un groupe n-butyle (-CH₂-CH₂-CH₂-CH₃), un groupe n-pentyle (-CH₂-CH₂-CH₂-CH₂-CH₃), un groupe n-hexyle (-CH₂-CH₂-CH₂-CH₂-CH₂-CH₃), un groupe n-heptyle (-CH₂-CH₂-CH₂-CH₂-CH₂-CH₂-CH₃), un groupe iso-propyle (-CH(CH₃)₂), un groupe iso-butyle (-CH₂CH(CH₃)₂).

Des solvants sulfones linéaires spécifiques peuvent être l'éthylméthylsulfone, la di(n-butyl)sulfone, la méthylisopropylsulfone, l'éthylisopropylsulfone, la diéthylsulfone, la di-n-propylsulfone, la diméthylsulfone, la 2-fluorophénylméthylsulfone.

Avantageusement, les solvants sulfones linéaires peuvent être l'éthylméthylsulfone (pouvant être dénommée par l'abréviation EMS), la méthylisopropylsulfone (pouvant être dénommée par l'abréviation MIS), ces solvants présentant une constante diélectrique élevée.

Le ou les solvants sulfones peuvent être compris dans l'électrolyte à hauteur de 10 à 90% en masse par rapport à la masse de l'électrolyte.

L'électrolyte peut comprendre un seul type de solvant sulfone ou un mélange de solvants sulfones, qui peut constituer notamment un mélange eutectique permettant d'abaisser la température de fusion des solvants constitutifs du mélange.

L'électrolyte peut comprendre, en tant que solvant(s), uniquement un ou plusieurs solvants sulfones mais peut comprendre, également, un ou plusieurs cosolvants, qui ne sont pas des solvants sulfones.

En particulier, le ou les cosolvants peuvent être des solvants carbonates, tels que :
- des solvants carbonates linéaires, tels que le carbonate de diméthyle (connu sous l'abréviation DMC), le carbonate de diéthyle (connu sous l'abréviation DEC), l'éthylméthylcarbonate (connu sous l'abréviation EMC) ou les mélanges de ceux-ci ;
- des solvants carbonates cycliques, tels que le carbonate d'éthylène (connu sous l'abréviation EC), le carbonate de propylène (connu sous l'abréviation PC) ou les mélanges de ceux-ci.

Les solvants carbonates linéaires peuvent être utilisés pour diminuer la viscosité de l'électrolyte, tandis que les solvants carbonates cycliques peuvent être utilisés pour contribuer à créer une couche de passivation à la surface des électrodes, avec lesquelles l'électrolyte va être mis en contact.

La liste de solvants carbonates mentionnés ci-dessus n'est pas exhaustive.

L'électrolyte peut comprendre un seul cosolvant ou un mélange de cosolvants, ce cosolvant ou ce mélange de cosolvants pouvant être présent à hauteur de 10% à 90% en masse par rapport à la masse totale de l'électrolyte.

Des exemples spécifiques de mélanges de solvants pouvant entrer dans la constitution de l'électrolyte sont :
- un mélange EMS-DMC (par exemple, en proportion massique 1 :1) ;
- un mélange EMS-DEC (par exemple, en proportion massique 1 :1) ;
- un mélange TMS-DMC (par exemple, en proportion massique 1 :1) ;
- un mélange EC-EMS-DMC (par exemple, en proportion massique 1 :1 :3) ;
- un mélange EMS-MIS-DMC (par exemple, en proportion massique 2 :3 :5) ;
- un mélange EMS-EMC (par exemple, en proportion massique 1 :1) ; ou
- un mélange MIS-DMC (par exemple, en proportion massique 2 :3).

Comme mentionné ci-dessus, l'électrolyte comporte, comme élément essentiel, un additif qui est un composé anhydride.

Plus spécifiquement, l'additif peut être un anhydride carboxylique cyclique ou acyclique. Plus particulièrement, il peut s'agir d'un anhydride dicarboxylique. Il peut comprendre un ou plusieurs atomes d'halogène, tels que des atomes de fluor, de brome ou de chlore. Il peut être utilisé seul ou en mélange.

Cet additif peut être présent dans l'électrolyte selon un teneur allant de 0,01% à 30% en masse par rapport à la masse totale de l'électrolyte.

A titre d'exemples, on peut citer l'anhydride succinique (connu sous l'abréviation AS), l'anhydride maléique (connu sous l'abréviation AM), l'anhydride glutarique (connu sous l'abréviation AG), l'anhydride phtalique (connu sous l'abréviation APh), l'anhydride benzoïque, l'anhydride éthanoïque, l'anhydride propanoïque, l'anhydride butanoïque, l'anhydride cis-butènedioïque, l'anhydride butane-1,4-dicarboxylique, l'anhydride pentane-1,5-dicarboxylique, l'anhydride hexane-1,6-dicarboxylique, l'anhydride 2,2-diméthylbutane-1,4-dicarboxylique, l'anhydride 2,2-diméthylpentane-1,5-dicarboxylique, l'anhydride 4-bromophtalique, l'anhydride 4-chloroformylphtalique, l'anhydride 3-méthylglutarique, l'anhydride hexafluoroglutarique, l'anhydride acétique, l'anhydride trifluoroacétique, l'anhydride 2,3-diméthylmaléique, l'anhydride 2,3-diphénylmaléique, l'anhydride 2,3-pyrazinedicarboxylique, l'anhydride 3,3-tétraméthylèneglutarique, l'anhydride difluorophtalique, l'anhydride benzoglutarique, l'anhydride phénylsuccinique, l'anhydride crotonique, l'anhydride isacoïque, l'anhydride pentafluoropropionique, l'anhydride propionique, l'anhydride 3-fluorophtalique, l'anhydride itaconique, l'anhydride 2-méthylènebutane-1,4-dicarboxylique et les mélanges de ceux-ci.

Avantageusement, le composé anhydride peut être l'anhydride succinique, pouvant être présent efficacement en une teneur commençant à 0,1% massique par rapport à la masse totale de l'électrolyte et se révélant encore plus efficace pour un teneur de 1% massique par rapport à la masse totale de l'électrolyte.

Le sel de lithium quant à lui peut être de l'hexafluorophosphate de lithium (LiPF₆), du perchlorate de lithium (LiClO₄), du tétrafluoroborate de lithium (LiBF₄), du trifluorométhylsulfonate de lithium, du bis(oxalato)borate de lithium (connu sous l'abréviation LiBOB), de l'hexafluoroarsénate de lithium (LiAsF₆) , du bistrifluorométhylsulfonylimide (connu sous l'abréviation LTFSI, un perfluoroalkylphosphate de lithium, tel que celui de formule LiP(CₙF₂ₙ₊₁) F₆₋ₓ où 0≤n≤10 et 0≤x≤6, du bis (perfluoroéthylsulfonyl)imide de lithium (connu sous l'abréviation LiBETI), un perfluoroalkylfluoroborate de lithium, tel que celui de formule LiB(CₙF₂ₙ₊₁)F₄₋ₓ où 0≤n≤10 et 0≤x≤4, le bis(trifluorométhanesulfonyl)imide de lithium (connu sous l'abréviation LiLm), le (difluorooxalato)borate de lithium (LiBF₂C₂O₄), le bispentafluoroéthylsulfonylimide de lithium. Le sel de lithium peut être utilisé seul ou en mélange.

De préférence, le sel de lithium est LiPF₆, par exemple, à une concentration de 1M.

Des électrolytes spécifiques conformes à l'invention peuvent être :
- un électrolyte comprenant un mélange EMS-DMC (par exemple, en proportion massique 1 :1), de l'anhydride succinique (1% massique par rapport à la masse totale de l'électrolyte) et du LiPF₆ 1M ;
- un électrolyte comprenant un mélange EMS-DEC (par exemple, en proportion massique 1 :1), de l'anhydride succinique (1% massique par rapport à la masse totale de l'électrolyte) et du LiPF₆ 1M ;
- un électrolyte comprenant un mélange TMS-DMC (par exemple, en proportion massique 1 :1), de l'anhydride succinique (1% massique par rapport à la masse totale de l'électrolyte) et du LiPF₆ 1M ;
- un électrolyte comprenant un mélange EC-EMS-DMC (par exemple, en proportion massique 1 :1 :3), de l'anhydride succinique (1% massique par rapport à la masse totale de l'électrolyte) et du LiPF₆ 1M ;
- un électrolyte comprenant un mélange EMS-MIS-DMC (par exemple, en proportion massique 2 :3 :5), de l'anhydride succinique (1% massique par rapport à la masse totale de l'électrolyte) et du LiPF₆ 1M ;
- un électrolyte comprenant un mélange EMS-EMC (par exemple, en proportion massique 1 :1), de l'anhydride succinique (1% massique par rapport à la masse totale de l'électrolyte) et du LiPF₆ 1M ; ou
- un électrolyte comprenant un mélange MIS-DMC (par exemple, en proportion massique 2 :3), de l'anhydride succinique (1% massique par rapport à la masse totale de l'électrolyte) et du LiPF₆ 1M.

En particulier, les électrolytes de l'invention sont particulièrement efficaces dans des batteries au lithium aptes à fournir une tension élevée (par exemple, de l'ordre de 5V par cellule), ces électrolytes étant ainsi compatibles avec des électrodes à fort potentiel.

En particulier, l'électrode positive comprend, comme matériau d'insertion du lithium ou matériau actif, un oxyde lithié de formule LiNi_{0,4}Mn_{1,6}O₄ ou LiNi_{0,5}Mn_{1,5}O₄.

Ces matériaux font partie de la catégorie générale des matériaux à insertion de lithium, dont la tension de décharge est supérieure à 4,5V exprimée par rapport au couple Li⁺/Li et plus spécifiquement, des matériaux du type matériau lithié à structure spinelle, ces matériaux étant connus sous l'appellation de « spinelle 5V », ces matériaux entrant, plus spécifiquement, dans la catégorie des oxydes lithiés comprenant du manganèse de structure spinelle de formule (VI) suivante :

LiNi₁₋ₓMn₁₊ₓO₄ (VI)

dans laquelle 0<x<1.

Plus spécifiquement, les oxydes de formule LiNi_{0,4}Mn_{1,6}O₄ ou LiNi_{0,5}Mn_{1,5}O₄ présentent la particularité de présenter un potentiel d'insertion/désinsertion du lithium de l'ordre de 4,7 V (ce potentiel étant exprimé par rapport au couple de référence Li+/Li).

En variante des oxydes lithiés susmentionnés de formule (VI) susmentionnée, et en dehors du cadre de l'invention, on peut citer, comme matériau actif d'électrode positif, un oxyde lithié de formule (VII) suivante :

Li₁₋ₓ₂Mn₁,_{5-y2}Ni_{0,5-z2}M_{y2+z2}O₄ (VII)

dans laquelle :
- x2<1, 0≤y2+z2<0,15 ; et
- M est un élément choisi parmi Cr, Mg, Al, Ti, Fe, Co, Ni, Cu, Zn, Ga, Nb, Sn, Zr et Ta.

Comme autres matériaux actifs d'électrode positive, on peut citer également :
- un matériau de formule LiM¹PO₄, dans laquelle M¹ est un élément de transition, des matériaux de ce type pouvant être LiCoPO₄ ou LiNiPO₄ ;
- un matériau de formule LiM²SO₄X¹, dans laquelle M² est un élément de transition et X¹ est un élément halogène, des matériaux de ce type pouvant être LiCoSO₄F, LiNiSO₄F ;
- un matériau de formule Li₂M³PO₄X², dans laquelle M³ est un élément de transition et X² est un élément halogène, des matériaux de ce type pouvant être Li₂CoPO₄F, Li₂NiPO₄F ;
- un matériau de formule Li₃V₂ (PO₄)₃, Li₂CoP₂O₇, Li₂NiSiO₄, LiNiVO₄ ; ou
- un matériau composite de formule x₃Li₂MnO₃ (1-x₃)LiMeO₂ avec 0≤x₃<1 et Me est un élément choisi parmi Ni, Co, Mn.

Outre la présence d'un matériau à insertion de lithium, l'électrode positive peut comprendre :
- au moins un matériau conducteur électronique ;
- au moins un liant pour assurer la cohésion entre ledit matériau à insertion de lithium et ledit matériau conducteur électronique ; et
- éventuellement, des fibres conductrices électroniques.

Le matériau conducteur électronique peut être, de préférence, un matériau carboné, à savoir un matériau comprenant du carbone à l'état élémentaire.

On peut citer comme matériau carboné, du noir de carbone.

Le liant peut être, de préférence, un liant polymérique, Parmi les liants polymériques susceptibles d'être utilisés, on peut citer :
*les (co)polymères fluorés éventuellement conducteurs de protons, tels que les polymères fluorés, tels qu'un polytétrafluoroéthylène (connu sous l'abréviation PTFE), un polyfluorure de vinylidène (connu sous l'abréviation PVDF) ;
*les polymères élastomères, tels qu'un copolymère styrène-butadiène (connu sous l'abréviation SBR) ;
*les polymères de la famille des celluloses, tels qu'une carboxyméthylcellulose (connue sous l'abréviation CMC) ; et
*les mélanges de ceux-ci.

Les fibres conductrices électroniques, lorsqu'elles sont présentes, peuvent participer, en outre, à la bonne tenue mécanique de l'électrode positive et sont choisies, à cet effet, de sorte à présenter un module d'Young très important. Des fibres adaptées à cette spécificité peuvent être des fibres de carbone, telles que des fibres de carbone du type Tenax® ou VGCF-H®. Les fibres de carbone Tenax® contribuent à améliorer les propriétés mécaniques et présentent une bonne conductivité électrique. Les fibres de carbone VGCF-H® sont des fibres synthétisées par vapeur et contribuent à améliorer les propriétés thermiques et électriques, la dispersion et l'homogénéité.

L'électrode négative comprend, comme matériau actif, un matériau qui peut un oxyde mixte de lithium, tel que Li₄Ti₅O₁₂.

En variante de matériau actif d'électrode négative, et en dehors du cadre de l'invention, on peut citer le carbone, par exemple, sous l'une de ses formes allotropiques, telles que le graphite, du lithium ou un alliage de lithium,

Outre la présence d'un matériau actif, l'électrode négative peut comprendre :
- au moins un matériau conducteur électronique ;
- au moins un liant pour assurer la cohésion entre ledit matériau à insertion de lithium et ledit matériau conducteur électronique ; et
- éventuellement, des fibres conductrices électroniques.

Le matériau conducteur électronique, le liant et les éventuelles fibres conductrices électroniques peuvent être de même nature que ceux explicités plus haut pour l'électrode positive. Dans le cadre de l'invention revendiquée, l'électrode positive comprend, comme matériau actif, du LiNi_{0,4}Mn_{1,6}O₄ ou LiNi_{0,5}Mn_{1,5}O₄ et l'électrode négative comprend, comme matériau actif, du Li₄Ti₅O₁₂.

Que ce soit pour l'électrode positive ou l'électrode négative, elles peuvent être associées à un collecteur de courant, qui peut se présenter sous forme d'une feuille métallique. Il peut s'agir notamment d'un collecteur de courant en aluminium.

Au sein des batteries conformes à l'invention, l'électrolyte de l'invention peut être amené, dans les cellules électrochimiques des batteries au lithium, telles que les batteries lithium-ion, à imprégner un séparateur, lequel est disposé entre l'électrode positive et l'électrode négative de la cellule électrochimique.

Ce séparateur peut être en un matériau poreux, tel qu'un matériau en fibre de verre, un matériau polymérique, tel que du polypropylène, du polyéthylène, de la cellulose, apte à accueillir dans sa porosité l'électrolyte liquide. Plus spécifiquement, il peut s'agir d'une membrane de type Celguard 2400®.

Parmi les électrolytes susceptibles d'entrer dans la constitution des batteries de l'invention, certains sont nouveaux, ces électrolytes étant des électrolytes conducteurs d'ions lithium comprenant au moins un solvant sulfone, au moins un additif choisi parmi les composés anhydrides, au moins un sel de lithium et comprenant, en outre, un ou plusieurs cosolvants qui forme(nt) un mélange avec le ou les solvants sulfones, ledit mélange étant choisi parmi un mélange EMS-DMC ; un mélange EMS-DEC ; un mélange TMS-DMC ; un mélange EC-EMS-DMC ; un mélange EMS-MIS-DMC ; un mélange EMS-EMC ; ou un mélange MIS-DMC.

En particulier, l'additif anhydride peut être un composé anhydride carboxylique cyclique ou acyclique et l'additif anhydride peut être présent selon un teneur allant de 0,01% à 30% en masse par rapport à la masse totale de l'électrolyte.

Plus spécifiquement, l'additif anhydride peut être choisi parmi l'anhydride succinique, l'anhydride maléique, l'anhydride glutarique, l'anhydride phtalique, l'anhydride benzoïque, l'anhydride éthanoïque, l'anhydride propanoïque, l'anhydride butanoïque, l'anhydride cis-butènedioïque, l'anhydride butane-1,4-dicarboxylique, l'anhydride pentane-1,5-dicarboxylique, l'anhydride hexane-1,6-dicarboxylique, l'anhydride 2,2-diméthylbutane-1,4-dicarboxylique, l'anhydride 2,2-diméthylpentane-1,5-dicarboxylique, l'anhydride 4-bromophtalique, l'anhydride 4-chloroformylphtalique, l'anhydride 3-méthylglutarique, l'anhydride hexafluoroglutarique, l'anhydride acétique, l'anhydride trifluoroacétique, l'anhydride 2,3-diméthylmaléique, l'anhydride 2,3-diphénylmaléique, l'anhydride 2,3-pyrazinedicarboxylique, l'anhydride 3,3-tétraméthylèneglutarique, l'anhydride difluorophtalique, l'anhydride benzoglutarique, l'anhydride phénylsuccinique, l'anhydride crotonique, l'anhydride isacoïque, l'anhydride pentafluoropropionique, l'anhydride propionique, l'anhydride 3-fluorophtalique, l'anhydride itaconique, l'anhydride 2-méthylènebutane-1,4-dicarboxylique et les mélanges de ceux-ci.

Avantageusement, l'additif anhydride est l'anhydride succinique.

Les spécificités concernant le ou les solvants sulfones, le ou les sels de lithium peuvent être reprises dans la partie relative à la description des batteries en tant que telles.

Des électrolytes particuliers conformes à l'invention peuvent être :
- un électrolyte comprenant un mélange EMS-DMC (par exemple, en proportion massique 1 :1), de l'anhydride succinique (1% massique par rapport à la masse totale de l'électrolyte) et du LiPF₆ 1M ;
- un électrolyte comprenant un mélange EMS-DEC (par exemple, en proportion massique 1 :1), de l'anhydride succinique (1% massique par rapport à la masse totale de l'électrolyte) et du LiPF₆ 1M ;
- un électrolyte comprenant un mélange TMS-DMC (par exemple, en proportion massique 1 :1), de l'anhydride succinique (1% massique par rapport à la masse totale de l'électrolyte) et du LiPF₆ 1M ;
- un électrolyte comprenant un mélange EC-EMS-DMC (par exemple, en proportion massique 1 :1 :3), de l'anhydride succinique (1% massique par rapport à la masse totale de l'électrolyte) et du LiPF₆ 1M ;
- un électrolyte comprenant un mélange EMS-MIS-DMC (par exemple, en proportion massique 2 :3 :5), de l'anhydride succinique (1% massique par rapport à la masse totale de l'électrolyte) et du LiPF₆ 1M ;
- un électrolyte comprenant un mélange EMS-EMC (par exemple, en proportion massique 1 :1), de l'anhydride succinique (1% massique par rapport à la masse totale de l'électrolyte) et du LiPF₆ 1M ; ou
- un électrolyte comprenant un mélange MIS-DMC (par exemple, en proportion massique 2 :3), de l'anhydride succinique (1% massique par rapport à la masse totale de l'électrolyte) et du LiPF₆ 1M.

L'invention va maintenant être décrite, en référence aux exemples suivants, donnés à titre indicatif et non limitatif.

### BREVE DESCRIPTION DES FIGURES

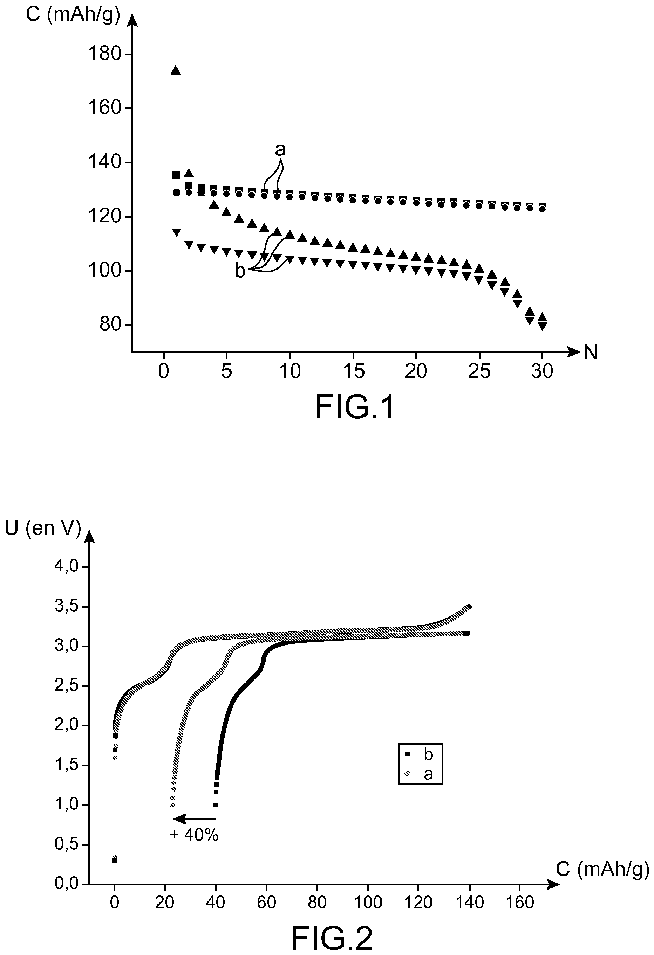

La figure 1 est un graphique illustrant, pour les essais de l'exemple 1, l'évolution de la capacité C (en mAh/g) à 20°C en fonction du nombre de cycles N, les courbes a) illustrant les courbes de charge-décharge pour la batterie conforme à l'invention tandis que les courbes b) illustrent les courbes de charge-décharge pour la batterie non conforme à l'invention.
La figure 2 est un graphique illustrant, pour les essais de l'exemple 2, l'évolution du potentiel U (en V) en fonction de la capacité C(en mAh/g) à 20°C de batteries lors d'un premier cycle comprenant une phase de charge et une phase de décharge, lesdites phases étant entrecoupées d'une période de 14 jours en circuit ouvert à 20°C (Courbes a) de charge-décharge pour la batterie de l'invention et courbes b) de charge-décharge de la batterie non conforme à l'invention).

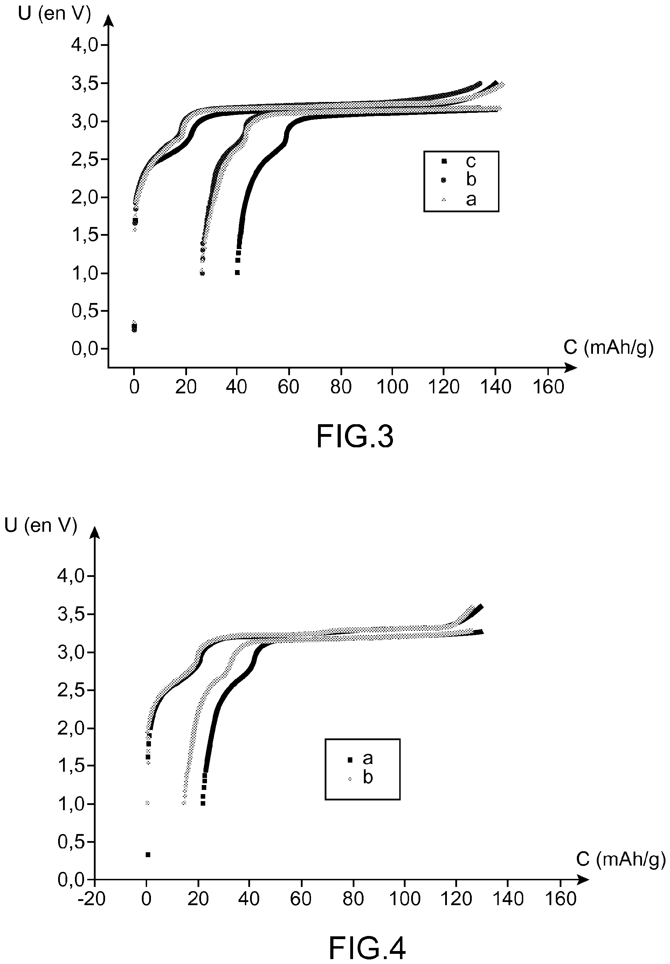

La figure 3 est un graphique illustrant, pour les essais de l'exemple 3, l'évolution du potentiel U (en V) en fonction de la capacité C (en mAh/g) à 20°C de batteries lors d'un premier cycle comprenant une phase de charge et une phase de décharge, lesdites phases étant entrecoupées d'une période de 14 jours en circuit ouvert à 20°C (Courbes a) de charge-décharge pour la première batterie de l'invention, courbes b) de charge-décharge de la deuxième batterie conforme à l'invention et courbes c) de charge-décharge pour la batterie non conforme à l'invention).
La figure 4 est un graphique illustrant l'évolution du potentiel U (en V) en fonction de la capacité C (en mAh/g) à 20°C d'une batterie conforme à l'invention soumise à deux test tels qu'explicités à l'exemple 4.

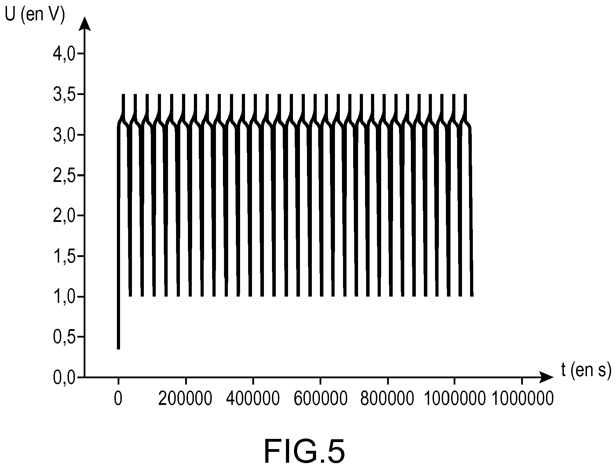

La figure 5 est un graphique illustrant, pour l'exemple 5, l'évolution du potentiel U (en V par rapport à LTO) en fonction du temps t (exprimé en secondes), au cours des 30 cycles, la courbe de chaque cycle comprenant une phase ascendante (cela correspond à la phase de charge) et une phase descendante (cela correspond à la phase de décharge) pour une batterie conforme à l'invention.

### EXPOSÉ DÉTAILLÉ DE MODES DE RÉALISATION PARTICULIERS

Les exemples, qui suivent, ont été mis en oeuvre pour illustrer l'apport d'un composé anhydride en tant qu'additif dans un électrolyte à base d'au moins un composé sulfone pour des batteries lithium-ion comprenant des électrodes à haut potentiel.

Les objectifs visés par ces exemples sont :
- de mettre en évidence les performances d'un électrolyte à base de composé(s) sulfone(s) linéaire(s) ou cyclique(s) dans une batterie lithium-ion par rapport à un électrolyte à base de solvant (s) carbonate (s) ;
- de mettre en évidence l'apport d'additif anhydride dans un électrolyte à base de composé(s) sulfone(s) linéaire(s) ou cyclique(s) dans une batterie lithium-ion ;
- de mettre en évidence l'amélioration des performances d'une batterie lithium-ion grâce l'apport d'additif anhydride dans un électrolyte à base de composé(s) sulfone(s) linéaire(s) ou cyclique(s) par rapport à un électrolyte toujours à base de composé(s) sulfone(s) linéaire(s) ou cyclique(s) mais comprenant un additif conventionnel pour des électrolyte de type carbonate.

Dans ces exemples, une attention toute particulière est apportée sur la pureté de chaque constituant entrant dans la composition des électrolytes, notamment au niveau des solvants, qui sont distillés puis séchés sur tamis moléculaire, dès lors qu'ils présentent une pureté inférieure à 99,9%.

### EXEMPLE 1

Cette exemple, à visée comparative, a pour but de comparer les performances :
- d'une batterie lithium-ion utilisant un électrolyte conforme à l'invention (à savoir, un électrolyte comprenant un mélange d'éthylméthylsulfone (symbolisé, par la suite, par EMS) et de carbonate de diméthyle (symbolisé, par la suite, par DMC) (en proportions massiques 1 :1) comprenant du LiPF₆ 1M et 1% massique d'anhydride succinique (symbolisé, par la suite, par AS) ; et
- d'une batterie lithium-ion utilisant un électrolyte non conforme à l'invention (à savoir, un électrolyte comprenant un mélange d'éthylméthylsulfone (symbolisé, par la suite, par EMS) et de carbonate de diméthyle (symbolisé, par la suite, par DMC) (en proportions massiques 1 :1) comprenant du LiPF₆ 1M et 1% massique de carbonate de vinylène (symbolisé, par la suite, par VS).

La présentation de cet exemple s'articule en trois parties :
1°) Préparation de l'électrolyte conforme à l'invention et de la batterie le comprenant ;
2°) Préparation de l'électrolyte non conforme à l'invention et de la batterie le comprenant ;
3°) Résultats concernant les performances de cyclabilité.

### 1°) Préparation de l'électrolyte conforme à l'invention et de la batterie le comprenant

### a) Approvisionnement et préparation des composants

L'éthylméthylsulfone (EMS) est approvisionnée auprès de la société TCI (Tokyo Industry, Co, Ltd, Japon). Ce solvant est distillé pour atteindre une pureté supérieure à 99,9% vérifiée par chromatographie gazeuse couplée avec la spectrométrie de masse.

L'éthylméthylsulfone (EMS) est ensuite conditionnée dans un flacon en verre sous argon, ledit flacon contenant un agent desséchant (sous forme d'un tamis moléculaire). La concentration en H₂O est régulièrement mesurée par la méthode de Karl-Fischer et est inférieure à 20 ppm.

Avant son utilisation, l'éthylméthylsulfone (EMS) est préalablement chauffée à 60°C en raison de sa température de fusion élevée (de l'ordre de 34°C).

Le carbonate de diméthyle (DMC) de « qualité batterie » (soit une pureté de 99,9%) provient de la société Merck. Le solvant est conditionné dans son emballage d'origine (à savoir, une bouteille d'aluminium) en boîte à gants et est utilisé sans traitement spécifique.

L'anhydride succinique (AS) est approvisionné auprès de la société Alfa Aesar. L'additif est conditionné dans son emballage d'origine (à savoir, une bouteille d'aluminium) en boîte à gants et est utilisé sans traitement spécifique.

Le sel LiPF₆ provient de la société Fluorochem. Ce sel est conditionné dans son emballage d'origine (à savoir, une bouteille en plastique) en boîte à gants et est utilisé sans traitement spécifique.

### b) Développement de l'électrolyte

Le développement et la préparation d'électrolyte sont réalisés sous argon sec dans une boîte à gants.

Dans un premier temps, les solvants EMS et DMC sont associés suivant une proportion massique de 1 :1. Le sel LiPF₆ est ajouté jusqu'à atteindre une concentration de 1M. Puis l'anhydride succinique est ajouté de sorte à atteindre une teneur d'anhydride succinique de 1% massique par rapport à la masse totale de l'électrolyte.

L'électrolyte ainsi obtenu est conditionné dans un flacon en aluminium et est stocké plusieurs heures avant son utilisation.

Cet électrolyte constitue un mélange dissociant avec une constante diélectrique proche de 30 et peu visqueux (une viscosité sans sel inférieure à 2 mPa.s).

Les teneurs en H₂O et en HF de l'électrolyte (mesurées par la méthode de Schmidt et d'Oesten) sont vérifiées avant l'évaluation électrochimique en pile bouton. La teneur en H₂O est inférieure à 20 ppm et la teneur en HF est inférieure à 50 ppm.

### c) Réalisation de la batterie

L'électrolyte est introduit au sein d'une pile bouton de type 2032.

L'électrode positive de la pile bouton comprend le matériau actif LiNi_{0,4}Mn_{1,6}O₄, du carbone super P, des fibres Tenax et un liant polyfluorure de vinylidène (PVDF) à raison des teneurs massiques respectives : 89%, 3%, 3% et 5%, ces teneurs étant exprimées par rapport à la masse totale de l'électrode positive. L'électrode positive se présente sous forme d'un disque de 14 mm de diamètre, laquelle électrode est supportée par un collecteur de courant en aluminium.

L'électrode négative de la pile bouton comprend le matériau actif Li₄Ti₅O₁₂, du carbone super P, des fibres Tenax et un liant polyfluorure de vinylidène (PVDF), à raison des teneurs massiques respectives : 82%, 6%, 6% et 6%, ces teneurs étant exprimées par rapport à la masse totale de l'électrode négative. L'électrode positive se présente sous forme d'un disque de 16 mm de diamètre, laquelle électrode est supportée par un collecteur de courant en aluminium.

L'électrode positive et l'électrode négative sont séparées par un disque de Celgard 2400 ® et un disque en Vilédon®, dont les diamètres sont de 16,5 mm et les épaisseurs respectives sont de 20 et 230 µm. Le séparateur formé des deux disques susmentionnés est imbibé de l'électrolyte (150 µL) lors de l'assemblage de la pile bouton en boîte à gants.

### 2°) Préparation de l'électrolyte non conforme à l'invention et de la batterie le comprenant

L'électrolyte et la batterie le comprenant sont réalisées de manière similaire à celles du paragraphe 1°) ci-dessus, si ce n'est que l'anhydride succinique (AC) est remplacé par du carbonate de vinylène (VC).

Le carbonate de vinylène (VC) est approvisionné auprès de la société ACros Organics. Il est conditionné dans son emballage d'origine (à savoir, une bouteille en verre) en boîte à gants et est utilisé sans traitement spécifique.

### 3°) Résultats concernant les performances de cyclabilité

Avec les batteries réalisées au paragraphe 1°) et 2°), il est réalisé des tests pour déterminer l'évolution de la capacité de charge et de décharge, ces tests étant réalisés à 20°C sous un régime de C/5-D/5.

Les résultats sont reportés sur la figure 1 illustrant l'évolution de la capacité C (en mAh/g) en fonction du nombre de cycles N, les courbes a) illustrant les courbes de charge-décharge pour la batterie conforme à l'invention, tandis que les courbes b) illustrent les courbes de charge-décharge pour la batterie non conforme à l'invention.

Il apparaît clairement que la batterie conforme à l'invention présente une meilleure cyclabilité en comparaison avec la batterie comprenant, comme additif, du carbonate de vinylène.

En effet, la capacité après 30 cycles est d'environ 123 mAh/g avec la batterie conforme à l'invention, tandis qu'elle atteint une valeur inférieure à 90 mAh/g avec une batterie comprenant, comme additif, du carbonate de vinylène.

### EXEMPLE 2

Cet exemple, à visée comparative, a pour but de comparer les performances :
- d'une batterie lithium-ion utilisant un électrolyte conforme à l'invention (à savoir, un électrolyte comprenant un mélange d'éthylméthylsulfone (symbolisé, par la suite, par EMS) et de carbonate de diméthyle (symbolisé, par la suite, par DMC) (en proportions massiques comprenant du LiPF₆ 1M et 1% massique d'anhydride succinique (symbolisé, par la suite, par AS) ; et
- d'une batterie lithium-ion utilisant un électrolyte non conforme à l'invention (à savoir, un électrolyte comprenant un mélange d'éthylméthylsulfone (symbolisé, par la suite, par EMS) et de carbonate de diméthyle (symbolisé, par la suite, par DMC) (en proportions massiques 1 :1) comprenant du LiPF₆ 1M.

La batterie conforme à l'invention est préparée de la même manière que celle de l'exemple 1.

La batterie non conforme à l'invention est préparée de la même manière que la batterie conforme à l'invention, si ce n'est qu'il n'est pas procédé à l'ajout d'anhydride succinique.

Avec ces batteries, il est effectué des tests visant à déterminer l'évolution de capacité à 20°C des batteries susmentionnées lors d'un premier cycle comprenant une phase de charge et une phase de décharge, lesdites phases étant entrecoupées d'une période de 14 jours en circuit ouvert à 20°C, comme illustrée sur la figure 2 (Courbes a) de charge-décharge pour la batterie de l'invention U(en V) en fonction de la capacité C (en mAh/g) et courbes b) de charge-décharge de la batterie non conforme à l'invention U (en V) en fonction de la capacité C (en mAh/g).

Au vu de cette figure, il apparaît clairement que la batterie de l'invention permet de réduire le phénomène d'autodécharge (à savoir, la perte de capacité durant la période en circuit ouvert) par rapport à la batterie non conforme à l'invention, la perte de capacité pour cette dernière étant de l'ordre de 40%.

Sans être lié par la théorie, les batteries de l'invention induisent la formation d'une interface électrode-électrolyte efficace dès le premier cycle contre les différents phénomènes conduisant à une autodécharge de la batterie (par exemple, une dégradation de l'électrolyte, des phénomènes de navettes électrochimiques).

### EXEMPLE 3

Cette exemple, à visée comparative, a pour but de comparer les performances :
- d'une première batterie lithium-ion utilisant un électrolyte conforme à l'invention (à savoir, un électrolyte comprenant un mélange d'éthylméthylsulfone (symbolisé, par la suite, par EMS) et de carbonate de diméthyle (symbolisé, par la suite, par DMC) (en proportions massiques 1 :1) comprenant du LiPF₆ 1M et 1% massique d'anhydride succinique (symbolisé, par la suite, par AS) ;
- d'une deuxième batterie lithium-ion utilisant un électrolyte conforme à l'invention (à savoir, un électrolyte comprenant un mélange d'éthylméthylsulfone (symbolisé, par la suite, par EMS) et de carbonate de diméthyle (symbolisé, par la suite, par DMC) (en proportions massiques 1 :1) comprenant du LiPF₆ 1M et 0,1% massique d'anhydride succinique (symbolisé, par la suite, par AS) ; et
- d'une batterie lithium-ion utilisant un électrolyte non conforme à l'invention (à savoir, un électrolyte comprenant un mélange d'éthylméthylsulfone (symbolisé, par la suite, par EMS) et de carbonate de diméthyle (symbolisé, par la suite, par DMC) (en proportions massiques 1 :1) comprenant du LiPF₆ 1M.

La première batterie conforme à l'invention est préparée de la même manière que celle de l'exemple 1.

La deuxième batterie conforme à l'invention est préparée de la même manière que celle de l'exemple 1, si ce n'est qu'il est ajouté uniquement 0,1% massique d'anhydride succinique.

La batterie non conforme à l'invention est préparée de la même manière que la batterie conforme à l'invention, si ce n'est qu'il n'est pas procédé à l'ajout d'anhydride succinique.

Avec ces batteries, il est effectué des tests visant à déterminer l'évolution de capacité à 20°C des batteries susmentionnées lors d'un premier cycle comprenant une phase de charge et une phase de décharge, lesdites phases étant entrecoupées d'une période de 14 jours en circuit ouvert à 20°C, comme illustrée sur la figure 3 (Courbes a) de charge-décharge U (en V) en fonction de la capacité C (en mAh/g) pour la première batterie de l'invention, courbes b) de charge-décharge U (en V) en fonction de la capacité C (en mAh/g) de la deuxième batterie conforme à l'invention et courbes c) de charge-décharge U (en V) en fonction de la capacité C (en mAh/g) pour la batterie non conforme à l'invention).

Au vu de cette figure, il apparaît clairement que les batteries de l'invention permettent de réduire le phénomène d'autodécharge (à savoir, la perte de capacité durant la période en circuit ouvert) par rapport à la batterie non conforme à l'invention, et ce même à partir d'un ajout d'une faible quantité d'anhydride succinique (par exemple, 0,1%), l'efficacité étant la même dans ce cas que pour l'ajout de 1% d'anhydride succinique (les courbes a) et b) étant superposées sur la figure 3).

### EXEMPLE 4

Cet exemple a pour but de démontrer l'influence du cyclage avant stockage sur l'autodécharge d'une batterie comprenant un électrolyte conforme à l'invention tel que défini à l'exemple 1.

Il est procédé à deux tests :
- un premier test consistant à charger la batterie, la mettre en circuit ouvert pendant 14 jours puis à décharger la batterie ; (cf. courbes a) U (en V) en fonction de la capacité C (en mAh/g) de la figure 4 illustrant la phase de charge et la phase de décharge) ; et
- un deuxième test consistant à opérer 4 cyclages charge-décharge, une charge de la batterie, une mise en circuit ouvert pendant 14 jours puis une décharge de la batterie (courbes b) U (en V) en fonction de la capacité C (en mAh/g) de la figure 4).

Ces tests sont réalisés à 20°C avec, pour les charges, un régime de C/5 et pour les décharges, un régime de D/5.

Les résultats de ces tests sont illustrés sur la figure 4 avec :
- pour les courbes a), la phase de charge et la phase de décharge du premier test, ces deux charges étant entrecoupées d'une mise en circuit ouvert de 14 jours ;
- pour les courbes b), la phase de charge et la phase de décharge du deuxième test, ces deux charges étant entrecoupées d'une mise en circuit ouvert de 14 jours (les 4 cyclages charge-décharge ne sont pas illustrés sur cette figure).

Il apparaît que les cyclages préliminaires de la batterie avant la mise au circuit ouvert permettent de réduire plus efficacement l'autodécharge grâce notamment à l'amélioration de l'interface électrode-électrolyte.

### EXEMPLE 5

Cet exemple a pour but de démontrer les performances de cyclabilité d'une batterie comprenant un électrolyte conforme à l'invention telle que définie à l'exemple 1.

Pour ce faire, la batterie en question a été soumise à 30 cycles de charge-décharge sous un régime de C/5-D/5.

Les courbes de charge-décharge sont reportées sur la figure 5, qui représente l'évolution du potentiel U (en V par rapport à LTO) en fonction du temps t (exprimé en secondes), au cours des 30 cycles, la courbe de chaque cycle comprenant une phase ascendante (cela correspond à la phase de charge) et une phase descendante (cela correspond à la phase de décharge).

Chaque courbe présente une allure identique, ce qui atteste des bonnes performances de cyclabilité de la batterie comprenant un électrolyte conforme à l'invention.

Qui plus est, l'efficacité coulombique de la batterie, après 30 cycles, est de 99,3%.

### EXEMPLE 6

Cet exemple a pour but de démontrer que :
1°) les électrolytes à base de solvant(s) sulfone(s) comprenant un additif anhydride présentent de performances meilleures notamment en termes de perte de capacités après un nombre certain de cyclages par rapport à des électrolytes comprenant le ou les mêmes solvants sulfones mais sans additif ; et
2°) les électrolytes à base de solvant(s) sulfone(s) comprenant un additif anhydride présentent des performances meilleures notamment en termes de perte de capacités après un nombre certain nombre de cyclages par rapport à des électrolytes comprenant le ou les mêmes solvants sulfones comprenant un additif conventionnel pour des électrolytes de type carbonate.

Pour démontrer le point 1°), les électrolytes suivants ont été testés :
- un électrolyte comprenant un mélange d'éthylméthylsulfone (symbolisé, par la suite, par EMS) et de carbonate de diméthyle (symbolisé, par la suite, par DMC) (en proportions massiques 1 :1) comprenant du LiPF₆ 1M et un électrolyte comprenant les mêmes ingrédients avec, en plus, 1% massique d'anhydride succinique ;
- un électrolyte comprenant un mélange d'éthylméthylsulfone (symbolisé, par la suite, par EMS) et de carbonate de diéthyle (symbolisé, par la suite, par DEC) (en proportions massiques 1 :1) comprenant du LiPF₆ 1M et un électrolyte comprenant les mêmes ingrédients avec, en plus, 1% massique d'anhydride succinique ;
- un électrolyte comprenant un mélange de sulfone de tétraméthylène (symbolisé, par la suite, par TMS) et de carbonate de diméthyle (symbolisé, par la suite, par DMC) (en proportions massiques 1 :1) comprenant du LiPF₆ 1M et un électrolyte comprenant les mêmes ingrédients avec, en plus, 1% massique d'anhydride succinique ;

- un électrolyte comprenant un mélange de carbonate d'éthylène (symbolisé, par la suite, par EC) d'éthylméthylsulfone (symbolisé, par la suite, par EMS) et de carbonate de diméthyle (symbolisé, par la suite, par DMC) (en proportions massiques 1 :1 :3) comprenant du LiPF₆ 1M et un électrolyte comprenant les mêmes ingrédients avec, en plus, 1% massique d'anhydride succinique ; et
- un électrolyte comprenant un mélange de d'éthylméthylsulfone (symbolisé, par la suite, par EMS), du méthyl isopropyl sulfone (symbolisé, par la suite, par MIS) et de carbonate de diméthyle (symbolisé, par la suite, par DMC) (en proportions massiques 2 :3 :5) comprenant du LiPF₆ 1M et un électrolyte comprenant les mêmes ingrédients avec, en plus, 1% massique d'anhydride succinique.

Les électrolytes sont préparés préalablement à la mise en oeuvre des tests.

L'électrolyte comprenant un mélange d'éthylméthylsulfone (symbolisé, par la suite, par EMS) et de carbonate de diméthyle (symbolisé, par la suite, par DMC) (en proportions massiques 1 :1) comprenant du LiPF₆ 1M et l'électrolyte comprenant les mêmes ingrédients avec, en plus, 1% massique d'anhydride succinique sont préparés conformément à ce qui explicité aux exemples 1 et 2.

L'électrolyte comprenant un mélange d'éthylméthylsulfone (symbolisé, par la suite, par EMS) et de carbonate de diéthyle (symbolisé, par la suite, par DEC) (en proportions massiques 1 :1) comprenant du LiPF₆ 1M et l'électrolyte comprenant les mêmes ingrédients avec, en plus, 1% massique d'anhydride succinique sont préparés sur le même mode que les modes de réalisations aux exemples 1 et 2, si ce n'est que le carbonate de diméthyle est remplacé par le carbonate de diéthyle.

L'électrolyte comprenant un mélange de sulfone de tétraméthylène (symbolisé, par la suite, par TMS) et de carbonate de diméthyle (symbolisé, par la suite, par DMC) (en proportions massiques 1 :1) comprenant du LiPF₆ 1M et un électrolyte comprenant les mêmes ingrédients avec, en plus, 1% massique d'anhydride succinique sont préparés sur le même mode que les modes de réalisations aux exemples 1 et 2, si ce n'est que l'éthylméthylsulfone est remplacé par le sulfone de tétraméthylène.

L'électrolyte comprenant un mélange de carbonate d'éthylène (symbolisé, par la suite, par EC) d'éthylméthylsulfone (symbolisé, par la suite, par EMS) et de carbonate de diméthyle (symbolisé, par la suite, par DMC) (en proportions massiques 1 :1 :3) comprenant du LiPF₆ 1M et un électrolyte comprenant les mêmes ingrédients avec, en plus, 1% massique d'anhydride succinique, sont préparés sur le même mode que les modes de réalisations aux exemples 1 et 2, si ce n'est qu'il est ajouté du carbonate d'éthylène.

L'électrolyte comprenant un mélange de d'éthylméthylsulfone (symbolisé, par la suite, par EMS), du méthyl isopropyl sulfone (symbolisé, par la suite, par MIS) et de carbonate de diméthyle (symbolisé, par la suite, par DMC) (en proportions massiques 2 :3 :5) comprenant du LiPF₆ 1M et un électrolyte comprenant les mêmes ingrédients avec, en plus, 1% massique d'anhydride succinique sont préparés sur le même mode que les modes de réalisations aux exemples 1 et 2, si ce n'est qu'il est ajouté du méthyl isopropyl sulfone.

Ces différents électrolytes sont testés dans une batterie lithium-ion de même nature que celle explicitée à l'exemple 1. Il est déterminé respectivement le % de perte de capacité entre la première décharge et la 30^{ème} décharge à 20°C avec un régime C/5-D/5. Il est également déterminé l'efficacité coulombique.

Les résultats sont reportés dans le tableau ci-dessous.

| Electrolyte | | | Tests | |
|---|---|---|---|---|
| Mélange de solvants | Sel | Additif (en % massique) | % de perte de capacité | Efficacité coulombique (en %) |
| EMS/DMC | 1M LiPF₆ | 0% | 0,9 | 99,3 |
| EMS/DMC | 1M LiPF₆ | 1% AS | 0 | 99,3 |
| EMS/DEC | 1M LiPF₆ | 0% | 0, 9 | 99,5 |
| EMS/DEC | 1M LiPF₆ | 1% AS | 0,1 | 99,3 |
| TMS/DMC | 1M LiPF₆ | 0% | 0,6 | 99,1 |
| TMS/DMC | 1M LiPF₆ | 1% AS | -0,5 | 99,5 |
| EC/EMS/3DMC | 1M LiPF₆ | 0% | 3,2 | 99,1 |
| EC/EMS/3DMC | 1M LiPF₆ | 1% AS | 2 | 99,3 |
| 2EMS/3MIS/5DMC | 1M LiPF₆ | 0% | -1,8 | 99,1 |
| 2EMS/3MIS/5DMC | 1M LiPF₆ | 1% AS | -1 | 99,4 |

Au vu de ce tableau, il apparaît clairement que, pour un électrolyte comprenant un mélange de solvants dont au moins un des solvants est un solvant sulfone, l'ajout d'un additif anhydride permet de diminuer les pertes de capacité d'une batterie après un nombre important de cyclages.

Quant à l'efficacité coulombique, elle reste du même ordre de grandeur, que l'additif anhydride soit présent ou pas, ce qui atteste du fait que cet additif n'a pas d'effet négatif sur ce critère.

Pour démontrer le point 2°), il a été testé un électrolyte comprenant un mélange d'éthylméthylsulfone (symbolisé, par la suite, par EMS) et de carbonate de diméthyle (symbolisé, par la suite, par DMC) (en proportions massiques 1 :1) comprenant du LiPF₆ 1M et 1% massique d'anhydride succinique et un électrolyte comprenant un mélange d'éthylméthylsulfone (symbolisé, par la suite, par EMS) et de carbonate de diméthyle (symbolisé, par la suite, par DMC) (en proportions massiques 1 :1) comprenant du LiPF₆ 1M et 1% massique de carbonate de vinylène.

Pour ce dernier, la perte de capacité est de 30%, ce qui atteste de l'efficacité de l'additif anhydride dans un électrolyte par rapport à l'additif carbonate de vinylène.

### EXEMPLE 7

Cet exemple a pour de démontrer que :
1°) les électrolytes à base de solvant(s) sulfone(s) comprenant un additif anhydride présentent de meilleures performances notamment en termes de perte de capacités après un nombre certain de cyclages par rapport à des électrolytes comprenant le ou les mêmes solvants sulfones mais sans additif ; et
2°) les électrolytes à base de solvant (s) sulfone(s) comprenant un additif anhydride présentent de meilleures performances notamment en termes d'autodécharge et d'irréversibilité par rapport à des électrolytes comprenant uniquement des solvants carbonates.

Pour démontrer le point 1°), les mêmes électrolytes que ceux du point 1°) de l'exemple 6 sont utilisés, avec en plus l'électrolyte EMS/DMC, 1M LiPF₆ comprenant 0,1% de AS.

Ces électrolytes sont incorporés dans une batterie similaire à celle de l'exemple 6. Il est déterminé, à 20°C, respectivement la capacité en charge avant 14 jours de mise en circuit ouvert C_{Charge}14OCV (en mAh/g), la capacité en décharge après 14 jours de mise en circuit ouvert C_{Décharge}14OCV (en mAh/g) , le % d'autodécharge %ₐᵤₜₒ et le % d'irréversibilité entre la capacité de la première charge et la capacité de la deuxième charge après 14 jours de mise en circuit ouvert %ᵢᵣᵣ.

Les résultats figurent dans le tableau ci-dessous.

| Electrolyte | | | Tests | | | |
|---|---|---|---|---|---|---|
| Mélange de solvants | Sel | Additif (en % massique) | C_{Charge} 14OCV | C_{Décharge} 14OCV | %ₐᵤₜₒ | %ᵢᵣᵣ |
| EMS/DMC | 1M LiPF₆ | 0% | 140 | 100 | 28 | 6 |
| EMS/DMC | 1M LiPF₆ | 0,1% AS | 138 | 113 | 18 | 3 |
| EMS/DMC | 1M LiPF₆ | 1% AS | 139 | 116 | 16 | 3 |
| EMS/DEC | 1M LiPF₆ | 0% | 137 | 85 | 38 | 6 |
| EMS/DEC | 1M LiPF₆ | 1% AS | 140 | 111 | 20 | 5 |
| TMS/DMC | 1M LiPF₆ | 0% | 139 | 98 | 30 | 4 |
| TMS/DMC | 1M LiPF₆ | 1% AS | 140 | 117 | 15 | 0,8 |
| EC/EMS/3DMC | 1M LiPF₆ | 0% | 140 | 112 | 20 | 5 |
| EC/EMS/3DMC | 1M LiPF₆ | 1% AS | 142 | 112 | 18 | 5 |
| 2EMS/3MIS/ 5DMC | 1M LiPF₆ | 0% | 129 | 85 | 41 | 7 |
| 2EMS/3MIS/ 5DMC | 1M LiPF₆ | 1% AS | 137 | 112 | 14 | 3 |

L'introduction de l'additif anhydride améliore significativement les performances en autodécharge avec notamment une diminution de près de la moitié du phénomène d'autodécharge avec des mélanges binaires comprenant un solvant sulfone.

Pour démontrer le point 2°), il a été testé un électrolyte comprenant un mélange de solvants carbonates EC/DMC (en proportions massiques 1 :1) comprenant du LiPF₆ 1M et 1% massique d'anhydride succinique. Par rapport à l'électrolyte EMS/DMC, le % d'autodécharge est nettement plus important (24 contre 16), ce qui démontre l'efficacité de l'ajout d'un additif anhydride dans un électrolyte à base de solvant(s) sulfone(s) par rapport à un électrolyte comprenant uniquement des solvants carbonates.

## Revendications

1. Batterie au lithium comprenant au moins une cellule électrochimique comprenant un électrolyte conducteur d'ions lithium comprenant au moins un solvant sulfone, et au moins un sel de lithium, lequel électrolyte est disposé entre une électrode positive comprenant, comme matériau actif, un oxyde lithié de formule LiNi_{0,4}Mn_{1,6}O₄ ou LiNi_{0,5}Mn_{1,5}O₄ et une électrode négative comprenant, comme matériau actif, du Li₄Ti₅O₁₂, **caractérisée en ce que** l'électrolyte comprend également au moins un additif choisi parmi les composés anhydrides.

2. Batterie selon la revendication 1, dans laquelle le solvant sulfone est un solvant sulfone cyclique ou encore un solvant sulfone linéaire, avantageusement l'éthylméthylsufone (EMS) ou la méthylisopropylsulfone (MIS).

3. Batterie selon la revendication 2, dans laquelle le solvant sulfone cyclique répond à la formule (I) suivante : 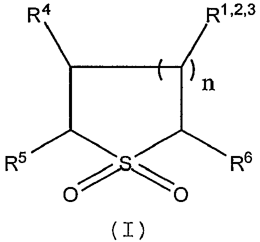 dans laquelle :
- R¹, R⁴, R⁵, R⁶ et, le cas échéant, R² et R³ représentent, indépendamment l'un de l'autre, un atome d'hydrogène, un atome d'halogène ou un groupe alkyle ;
- n est un entier allant de 1 à 3.

4. Batterie selon l'une des revendications précédentes, dans laquelle l'électrolyte comprend un mélange de sulfones cycliques.

5. Batterie selon la revendication 1 ou 2, dans laquelle le solvant sulfone est un solvant sulfone linéaire symétrique ou asymétrique.

6. Batterie selon l'une quelconque des revendications 1, 2 ou 5, dans laquelle le solvant sulfone est un solvant sulfone linéaire répondant à la formule (V) suivante :
R⁷-SO₂-R⁸ (V)
dans laquelle R⁷ et R⁸ représentent, indépendamment l'un de l'autre, un groupe alkyle comprenant de 1 à 7 atomes de carbone comprenant éventuellement un ou plusieurs atomes d'halogène, un groupe aryle comprenant éventuellement un ou plusieurs atomes d'halogène.

7. Batterie selon l'une quelconque des revendications précédentes, dans laquelle l'électrolyte comprend un ou plusieurs cosolvants, qui sont des solvants carbonates.

8. Batterie selon la revendication 7, dans laquelle le ou les cosolvants sont des solvants carbonates choisis parmi les solvants carbonates linéaires et les solvants carbonates cycliques, les solvants carbonates cycliques étant choisis parmi le carbonate d'éthylène (EC), le carbonate de propylène (PC) ou les mélanges de ceux-ci et les solvants carbonates linéaires étant choisis parmi le carbonate de diméthyle DMC), le carbonate de diéthyle (DEC), l'éthylméthylcarbonate (EMC) et les mélanges de ceux-ci.

9. Batterie selon l'une quelconque des revendications 7 ou 8, dans laquelle l'électrolyte comprend un ou plusieurs cosolvants qui forme(nt) un mélange avec le ou les solvants sulfones, ledit mélange étant choisi parmi :
- un mélange EMS-DMC, par exemple, en proportion massique 1:1
- un mélange EMS-DEC, par exemple, en proportion massique 1:1
- un mélange TMS-DMC, par exemple, en proportion massique 1:1
- un mélange EC-EMS-DMC, par exemple, en proportion massique 1:1:3
- un mélange EMS-MIS-DMC, par exemple, en proportion massique 2:3:5
- un mélange EMS-EMC, par exemple, en proportion massique 1:1
- un mélange MIS-DMC, par exemple, en proportion massique 2:3

10. Batterie selon l'une quelconque des revendications précédentes, dans laquelle l'additif anhydride est un composé anhydride carboxylique cyclique ou acyclique.

11. Batterie selon l'une quelconque des revendications précédentes, dans laquelle l'additif anhydride est présent selon un teneur allant de 0,01% à 30% en masse par rapport à la masse totale de l'électrolyte.

12. Batterie selon l'une quelconque des revendications précédentes, dans laquelle l'additif anhydride est choisi parmi l'anhydride succinique, l'anhydride maléique, l'anhydride glutarique, l'anhydride phtalique, l'anhydride benzoïque, l'anhydride éthanoïque, l'anhydride propanoïque, l'anhydride butanoïque, l'anhydride cis-butènedioïque, l'anhydride butane-1,4-dicarboxylique, l'anhydride pentane-1,5-dicarboxylique, l'anhydride hexane-1,6-dicarboxylique, l'anhydride 2,2-diméthylbutane-1,4-dicarboxylique, l'anhydride 2,2-diméthylpentane-1,5-dicarboxylique, l'anhydride 4-bromophtalique, l'anhydride 4-chloroformylphtalique, l'anhydride 3-méthylglutarique, l'anhydride hexafluoroglutarique, l'anhydride acétique, l'anhydride trifluoroacétique, l'anhydride 2,3-diméthylmaléique, l'anhydride 2,3-diphénylmaléique, l'anhydride 2,3-pyrazinedicarboxylique, l'anhydride 3,3-tétraméthylèneglutarique, l'anhydride difluorophtalique, l'anhydride benzoglutarique, l'anhydride phénylsuccinique, l'anhydride crotonique, l'anhydride isacoïque, l'anhydride pentafluoropropionique, l'anhydride propionique, l'anhydride 3-fluorophtalique, l'anhydride itaconique, l'anhydride 2-méthylènebutane-1,4-dicarboxylique et les mélanges de ceux-ci.

13. Batterie selon l'une quelconque des revendications précédentes, dans laquelle l'électrolyte est :
- un électrolyte comprenant un mélange EMS-DMC par exemple, en proportion massique 1:1, 1% massique d'anhydride succinique par rapport à la masse totale de l'électrolyte, et du LiPF₆ 1M ;
- un électrolyte comprenant un mélange EMS-DEC par exemple, en proportion massique 1:1, 1% massique d'anhydride succinique par rapport à la masse totale de l'électrolyte, et du LiPF₆ 1M ;
- un électrolyte comprenant un mélange TMS-DMC par exemple, en proportion massique 1:1, 1% massique d'anhydride succinique par rapport à la masse totale de l'électrolyte, et du LiPF₆ 1M ;
- un électrolyte comprenant un mélange EC-EMS-DMC par exemple, en proportion massique 1:1:3, 1% massique d'anhydride succinique par rapport à la masse totale de l'électrolyte, et du LiPF₆ 1M ;
- un électrolyte comprenant un mélange EMS-MIS-DMC par exemple, en proportion massique 2:3:5, 1% massique d'anhydride succinique par rapport à la masse totale de l'électrolyte, et du LiPF₆ 1M ;
- un électrolyte comprenant un mélange EMS-EMC par exemple, en proportion massique 1:1, 1% massique d'anhydride succinique par rapport à la masse totale de l'électrolyte, et du LiPF₆ 1M ; ou
- un électrolyte comprenant un mélange MIS-DMC par exemple, en proportion massique 2:3, 1% massique d'anhydride succinique par rapport à la masse totale de l'électrolyte, et du LiPF₆ 1M.

14. Electrolyte conducteur d'ions lithium comprenant au moins un solvant sulfone, au moins un additif anhydride, au moins un sel de lithium et comprenant, en outre, un ou plusieurs cosolvants qui forme (nt) un mélange avec le ou les solvants sulfones, ledit mélange étant choisi parmi un mélange EMS-DMC ; un mélange EMS-DEC ; un mélange TMS-DMC ; un mélange EC-EMS-DMC ; un mélange EMS-MIS-DMC ; un mélange EMS-EMC ; ou un mélange MIS-DMC, et **caractérisé en ce que** l'additif anhydride est l'anhydride succinique.

15. Electrolyte selon la revendication 14, dans lequel l'additif anhydride est présent selon un teneur allant de 0,01% à 30% en masse par rapport à la masse totale de l'électrolyte.

## Patentansprüche

1. Lithiumbatterie mit zumindest einer elektrochemischen Zelle, die einen lithiumionenleitenden Elektrolyten mit zumindest einem Sulfonlösungsmittel und zumindest einem Lithiumsalz enthält, wobei der Elektrolyt zwischen einer positiven Elektrode, die als aktives Material ein Lithiumoxid der Formel LiNi₀,₄Mn_{1,6}O₄ bzw. LiNi_{0,5}Mn_{1,5}O₄ enthält, und einer negativen Elektrode, die als aktives Material Li₄Ti₅O₁₂ enthält, angeordnet ist,
**dadurch gekennzeichnet, dass** der Elektrolyt auch zumindest einen Zusatzstoff enthält, der ausgewählt ist aus Anhydridverbindungen.

2. Batterie nach Anspruch 1, wobei das Sulfonlösungsmittel ein zyklisches Sulfonlösungsmittel oder auch ein lineares Sulfonlösungsmittel, vorteilhaft Etyhlmethylsulfon (EMS) oder Methylisopropylsulfon (MIS), ist.

3. Batterie nach Anspruch 2, wobei das zyklische Sulfonlösungsmittel der nachfolgenden Formel (I) entspricht: 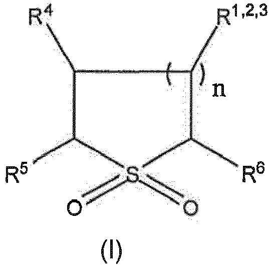 worin
- R¹, R⁴, R⁵, R⁶ und gegebenenfalls R² und R³ unabhängig voneinander ein Wasserstoffatom, ein Halogenatom oder eine Alkylgruppe darstellen,
- n eine ganze Zahl von 1 bis 3 ist.

4. Batterie nach einem der vorangehenden Ansprüche, wobei der Elektrolyt ein Gemisch aus zyklischen Sulfonen enthält.

5. Batterie nach Anspruch 1 oder 2, wobei das Sulfonlösungsmittel ein symmetrisches oder asymmetrisches lineares Sulfonlösungsmittel ist.

6. Batterie nach einem der Ansprüche 1, 2 oder 5, wobei das Sulfonlösungsmittel ein lineares Sulfonlösungsmittel ist, das der nachfolgenden Form (V) entspricht:
R⁷-SO₂-R⁸ (V)
worin R⁷ und R⁸ unabhängig voneinander eine Alkylgruppe mit 1 bis 7 Kohlenstoffatomen und gegebenenfalls einem oder mehreren Halogenatomen, eine Arylgruppe mit gegebenenfalls einem oder mehreren Halogenatomen darstellen.

7. Batterie nach einem der vorangehenden Ansprüche, wobei der Elektrolyt ein oder mehrere Colösungsmittel enthält, die Carbonatlösungsmittel sind.

8. Batterie nach Anspruch 7, wobei das bzw. die Colösungsmittel Carbonatlösungsmittel sind, die ausgewählt sind aus linearen Carbonatlösungsmitteln und zyklischen Carbonatlösungsmitteln, wobei die zyklischen Carbonatlösungsmittel ausgewählt sind aus Ethylencarbonat (EC), Propylencarbonat (PC) oder deren Gemischen, und die linearen Carbonatlösungsmittel ausgewählt sind aus Dimethylcarbonat (DMC), Diethylcarbonat (DEC), Ethylmethylcarbonat (EMC) und deren Gemischen.

9. Batterie nach einem der Ansprüche 7 oder 8, wobei der Elektrolyt ein oder mehrere Colösungsmittel enthält, das bzw. die ein Gemisch mit dem Sulfonlösungsmittel bzw. mit den Sulfonlösungsmitteln bildet/bilden, wobei das Gemisch ausgewählt ist aus:
- einem EMS-DMC-Gemisch im Masseverhältnis 1:1, beispielsweise;
- einem EMS-DEC-Gemisch im Masseverhältnis 1:1, beispielsweise;
- einem TMS-DMC-Gemisch im Masseverhältnis 1:1, beispielsweise:
- einem EC-EMS-DMC-Gemisch im Masseverhältnis 1:1:3, beispielsweise;
- einem EMS-MIS-DMC-Gemisch im Masseverhältnis 2:3:5, beispielsweise;
- einem EMS-EMC-Gemisch im Masseverhältnis 1:1, beispielsweise, oder
- einem MIS-DMC-Gemisch im Masseverhältnis 2:3, beispielsweise.

10. Batterie nach einem der vorangehenden Ansprüche, wobei der Anhydrid-Zusatzstoff eine zyklische oder azyklische Carbonsäureanhydridverbindung ist.

11. Batterie nach einem der vorangehenden Ansprüche, wobei der Anhydrid-Zusatzstoff mit einem Gehalt von 0,01 Masse-% bis 30 Masse-% bezogen auf die Gesamtmasse des Elektrolyten vorhanden ist.

12. Batterie nach einem der vorangehenden Ansprüche, wobei der Anhydrid-Zusatzstoff ausgewählt ist aus Bernsteinsäureanhydrid, Maleinsäureanhydrid, Glutarsäureanhydrid, Phthalsäureanhydrid, Benzoesäureanhydrid, Ethansäureanhydrid, Propionsäureanhydrid, Butansäureanhydrid, cis-Butendisäureanhydrid, Butan-1,4-Dicarbonsäureanhydrid, Pentan-1,5-Dicarbonsaäureanhydrid, Hexan-1,6-Dicarbonsäureanhydrid, 2,2-Diemethylbutan-1,4-Dicarbonsäureanhydrid, 2,2-Dimethlypentan-1,5-Dicarbonsäureanhydrid, 4-Bromphathalsäureanhydrid, 4-Chloroformylphthalsäureanhydrid, 3-Methylglutarsäureanhydrid, Hexafluorglutarsäureanhydrid, Essigsäureanhydrid, Trifluoressigsäureanhydrid, 2,3-Dimethylmaleinsäureanhydrid, 2,3-Diphenylmaleinsäureanhydrid, 2,3-Pyrazindicarbonsäureanhydrid, 3,3-Tetramethylenglutarsäureanhydrid, Difluorphthalsäureanhydrid, Benzoglutarsäureanhydrid, Phenylbernsteinsäureanhydrid, Crotonsäureanhydrid, Isatosäureanhydrid, Pentafluorpropionsäureanhydrid, Propionsäureanhydrid, 3-Fluorphthalsäureanhydrid, Itaconsäureanhydrid, 2-Methylbutan-1,4-Dicarbonsäureanhydrid, und deren Gemische.

13. Batterie nach einem der vorangehenden Ansprüche, wobei der Elektrolyt ist:
- ein Elektrolyt mit einem EMS-DMC-Gemisch im Masseverhältnis 1:1, beispielsweise, 1 Masse-% Bernsteinsäureanhydrid bezogen auf die Gesamtmasse des Elektrolyten und LiPF₆ 1M;
- ein Elektrolyt mit einem EMS-DEC-Gemisch im Masseverhältnis 1:1, beispielsweise, 1 Masse-% Bernsteinsäureanhydrid bezogen auf die Gesamtmasse des Elektrolyten und LiPF₆ 1M;
- ein Elektrolyt mit einem TMS-DMC-Gemisch im Masseverhältnis 1:1, beispielsweise, 1 Masse-% Bernsteinsäureanhydrid bezogen auf die Gesamtmasse des Elektrolyten und LiPF₆ 1M;
- ein Elektrolyt mit einem EC-EMS-DMC-Gemisch im Masseverhältnis 1:1:3, beispielsweise, 1 Masse-% Bernsteinsäureanhydrid bezogen auf die Gesamtmasse des Elektrolyten und LiPF₆ 1M;
- ein Elektrolyt mit einem EMS-MIS-DMC-Gemisch im Masseverhältnis 2:3:5, beispielsweise, 1 Masse-% Bernsteinsäureanhydrid bezogen auf die Gesamtmasse des Elektrolyten und LiPF₆ 1M;
- ein Elektrolyt mit einem EMS-EMC-Gemisch im Masseverhältnis 1:1, beispielsweise, 1 Masse-% Bernsteinsäureanhydrid bezogen auf die Gesamtmasse des Elektrolyten und LiPF₆ 1M; oder
- ein Elektrolyt mit einem MIS-DMC-Gemisch im Masseverhältnis 2:3, beispielsweise, 1 Masse-% Bernsteinsäureanhydrid bezogen auf die Gesamtmasse des Elektrolyten und LiPF₆ 1M;

14. Lithiumionenleitender Elektrolyt mit zumindest einem Sulfonlösungsmittel, zumindest einem Anhydrid-Zusatzstoff, zumindest einem Lithiumsalz und ferner mit einem oder mehreren Colösungsmitteln, die ein Gemisch mit dem Sulfonlösungsmittel bzw. den Sulfonlösungsmitteln bilden, wobei das Gemisch ausgewählt ist aus einem EMS-DMC-Gemisch, einem EMS-DEC-Gemisch, einem TMS-DMC-Gemisch, einem EC-EMS-DMC-Gemisch, einem EMS-MIS-DMC-Gemisch, einem EMS-EMC-Gemisch, oder einem MIS-DMC-Gemisch, **dadurch gekennzeichnet, dass** der Anhydrid-Zusatzstoff das Bernsteinsäureanhydrid ist.

15. Elektrolyt nach Anspruch 14, wobei der Anhydrid-Zusatzstoff mit einem Gehalt von 0,01 Masse-% bis 30 Masse-% bezogen auf die Gesamtmasse des Elektrolyten vorhanden ist.

## Claims

1. A lithium battery comprising at least one electrochemical cell comprising an electrolyte conducting lithium ions comprising at least one sulfone solvent and at least one lithium salt, which electrolyte is positioned between a positive electrode comprising, as an active material, a lithiated oxide of formula LiNi_{0.4}Mn_{1.6}O₄ or LiNi_{0.5}Mn_{1.5}O₄ and a negative electrode comprising, as an active material Li₄Ti₅O₁₂ **characterized in that** the electrolyte comprises further at least one additive selected from among anhydride compounds.

2. The battery according to claim 1, wherein the sulfone solvent is a cyclic sulfone solvent or further a linear sulfone solvent, advantageously ethylmethylsufone (EMS) or methylisopropylsulfone (MIS).

3. The battery according to claim 2, wherein the cyclic sulfone solvent fits the following formula (I): 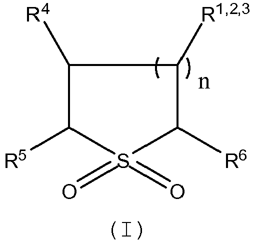 wherein:
- R¹, R⁴, R⁵, R⁶ and, if necessary R² and R³ represent, independently of each other, a hydrogen atom, a halogen atom or an alkyl group;
- n is an integer ranging from 1 to 3.

4. The battery according to one of the preceding claims, wherein the electrolyte comprises a mixture of cyclic sulfones.

5. The battery according to claim 1 or 2, wherein the sulfone solvent is a symmetrical or asymmetrical linear sulfone solvent.

6. The battery according to any of claims 1, 2 or 5, wherein the sulfone solvent is a linear sulfone solvent fitting the following formula (V):
R⁷-SO₂-R⁸ (V)
wherein R⁷ and R⁸ represent, independently of each other, an alkyl group comprising from 1 to 7 carbon atoms optionally comprising one or several halogen atoms, an aryl group optionally comprising one or several halogen atoms.

7. The battery according to any of the preceding claims, wherein the electrolyte comprises one or several co-solvents, which are carbonate solvents.

8. The battery according to claim 7, wherein the co-solvent(s) is (are) carbonate solvents selected from among linear carbonate solvents and cyclic carbonate solvents, the cyclic carbonate solvents chosen from among ethylene carbonate (EC), propylene carbonate (PC) or mixtures thereof and the linear carbonate solvents being chosen from among dimethyl carbonate (DMC), diethyl carbonate (DEC), ethylmethylcarbonate (EMC) and mixtures thereof.

9. The battery according to any of claims7 or 8, wherein the electrolyte comprises one or several co-solvents which form a mixture with the sulfone solvent(s), said mixture being selected from among:
- an EMS-DMC mixture, for example, in mass proportions 1:1;
- an EMS-DEC mixture, for example, in mass proportions 1:1;
- a TMS-DMC mixture, for example, in mass proportions 1:1;
- an EC-EMS-DMC mixture, for example, in mass proportions 1:1:3;
- an EMS-MIS-DMC mixture, for example, in mass proportions 2:3:5;
- an EMS-EMC mixture, for example, in mass proportions 1:1; or
- an MIS-DMC mixture, for example, in mass proportions 2:3.

10. The battery according to any of the preceding claims, wherein the anhydride additive is a cyclic or acyclic carboxylic anhydride compound.

11. The battery according to any of the preceding claims, wherein the anhydride additive is present according to a content ranging from 0.01% to 30% by mass based on the total mass of the electrolyte.

12. The battery according to any of the preceding claims, wherein the anhydride additive is selected from among succinic anhydride, maleic anhydride, glutaric anhydride, phthalic anhydride, benzoic anhydride, ethanoic anhydride, propanoic anhydride, butanoic anhydride, cis-butenedioic anhydride, butane-1,4-dicarboxylic anhydride, pentane-1,5-dicarboxylic anhydride, hexane-1,6-dicarboxylic anhydride, 2,2-dimethylbutane-1,4-dicarboxylic anhydride, 2,2-dimethylpentane-1,5-dicarboxylic anhydride, 4-bromophthalic anhydride, 4-chloroformylphthalic anhydride, 3-methylglutaric anhydride, hexafluoroglutaric anhydride, acetic anhydride, trifluoroacetic anhydride, 2,3-dimethylmaleic anhydride, 2,3-diphenylmaleic anhydride, 2,3-pyrazinedicarboxylic anhydride, 3,3-tetramethyleneglutaric anhydride, difluorophthalic anhydride, benzoglutaric anhydride, phenylsuccinic anhydride, crotonic anhydride, isacoic anhydride, pentafluoropropionic anhydride, propionic anhydride, 3-fluorophthalic anhydride, itaconic anhydride, 2-methylenebutane-1,4-dicarboxylic anhydride and mixtures thereof.

13. The battery according to any of the preceding claims, wherein the electrolyte is:
- an electrolyte comprising an EMS-DMC mixture, for example, in mass proportions 1:1, 1% by mass of succinic anhydride based on the total mass of the electrolyte and LiPF₆ 1M;
- an electrolyte comprising an EMS-DEC mixture, for example in mass proportions 1:1, 1% by mass of succinic anhydride based on the total mass of the electrolyte and LiPF₆ 1M;
- an electrolyte comprising a TMS-DMC mixture, for example, in mass proportions 1:1, 1% by mass of succinic anhydride based on the total mass of the electrolyte and LiPF₆ 1M;
- an electrolyte comprising an EC-EMS-DMC mixture, for example, in mass proportions 1:1:3, 1% by mass of succinic anhydride based on the total mass of the electrolyte and LiPF₆ 1M;
- an electrolyte comprising an EMS-MIS-DMC mixture, for example, in mass proportions 2:3:5, 1% by mass of succinic anhydride based on the total mass of the electrolyte and LiPF₆ 1M;
- an electrolyte comprising an EMS-EMC mixture, for example, in mass proportions 1:1, 1% by mass of succinic anhydride based on the total mass of the electrolyte and LiPF₆ 1M; or
- an electrolyte comprising an MIS-DMC mixture, for example, in mass proportions 2:3, 1% by mass of succinic anhydride based on the total mass of the electrolyte and LiPF₆ 1M.

14. An electrolyte conducting lithium ions comprising at least one sulfone solvent, at least one anhydride additive, at least one lithium salt and further comprising one or several co-solvents which form a mixture with the sulfone solvent(s), said mixture being selected from among an EMS-DMC mixture; an EMS-DEC mixture; a TMS-DMC mixture; an EC-EMS-DMC mixture; an EMS-MIS-DMC mixture; an EMS-EMC mixture; or an MIS-DMC mixture **characterized in that** the anhydride additive is succinic anhydride.

15. The electrolyte according to claim 14, wherein the anhydride additive is present in a content ranging from 0.01% to 30% by mass based on the total mass of the electrolyte.
